# EUROPEAN PATENT SPECIFICATION

(11) **EP 1 026 600 B1**
(45) Date of publication and mention of the grant of the patent: **06.10.2004**
(21) Application number: 00201754.9
(22) Date of filing: 28.02.1995
(51) Int. Cl.: G06F 13/42, G11C 7/00, G06F 12/02, G06F 13/16

(54) **Method and apparatus for interfacing with RAM**
Verfahren und Vorrichtung zur Schnittstellenbildung mit RAM-Speicher
Procédé et dispositif d'interface de mémoire à accès aléatoire

(30) Priority: 24.03.1994 GB 9405914; 29.07.1994 GB 9415365; 29.07.1994 GB 9415391; 29.07.1994 GB 9415413; 29.07.1994 GB 9415387
(43) Date of publication of application: 09.08.2000
(62) Divisional of application: 95301272.1
(73) Proprietor: Discovision Associates, Irvine, CA 92614 (US)
(72) Inventor: Jones, Anthony Mark, Yate, Bristol BS17 5TF (GB); Robbins, William Philip, Cam, Gloucestershire GL11 5PE (GB); Patterson, Donald William Walker, Redland, Bristol BS6 7JW (GB); Wise, Adrian Philip, Frenchay, Bristol BS16 1NA (GB); Finch, Helen Rosemary, Wotton Under Edge, Gloucesters. GL12 7ND (GB); Sotheran, Martin William, Dursley, Gloucestershire GL11 6BD (GB)
(74) Representative: Cabinet Hirsch

(56) References cited:
- EP-A- 0 468 480
- US-A- 5 138 448
- US-A- 5 231 605
- US-A- 5 265 212

## Description

The present Invention relates to random access memory (RAM), and more particularly, to a method and apparatus for interfacing with RAM.

Document EP-A-0 468 480 discloses a synchronous burst access memory provided with a mechanism intended to increment an address counting means, necessary for accessing a burst of N words, said mechanism being provided with means for burst length selection.

### BRIEF DESCRIPTION OF THE DRAWINGS

Figure 1 is a system block diagram of an apparatus that employs the method of the present invention to access a synchronous DRAM.
Figure 2 is a diagram of the interrelation between the high level commands received, and the low level commands generated, by the state machine of figure 1.
Figure 3 is a pictorial representation of the organization of the DRAM of figure 1.
Figure 4 is a pictorial representation of the organization of words stored in cells in the DRAM of figure 1.

### DETAILED DESCRIPTION OF THE PREFERRED EMBODIMENT

One aspect of the present invention is directed to a method for accessing RAM. In particular, the method of the invention accesses from a RAM a number M of words that is less than the predetermined fixed burst length N of the RAM. The RAM includes an enable line that selectably enables and disables reading from and writing to the RAM. In the method, first N words are ordered to be read from or written to the RAM. Next it is determined when M words have been read from or written to the RAM, M being less than N. Finally, the RAM is disabled upon determining M words had been read from or written to the RAM.

### METHOD FOR ACCESSING SYNCRONOUS DRAM

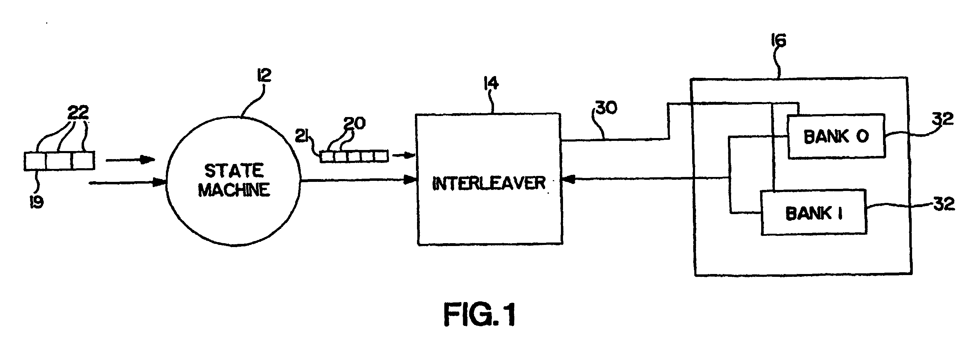

Referring now to figure 1, there is shown a block diagram of a system 10 for implementing the method of the present invention. System 10 includes state machine 12, interleaver 14, and synchronous DRAM 16. DRAM 16 includes two banks 32. Interleaver 14 controls access (e.g., read and write) to DRAM 16. Interleaver 14 includes counter (not shown) that tracks which bank 32 was most recently accessed, allowing interleaver 14 to easily toggle between banks 32.

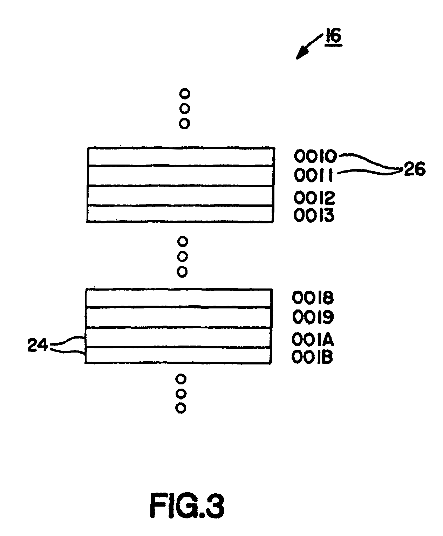

Referring now to figures 1, 2, and 3, upon receipt of a string 19 of high level commands 22 addressed to the same bank 32 of DRAM 16, state machine 12 generates a string 21 of optimized low-level commands 20 (i.e., the seven commands specified by JEDEC, and listed above) addressed to the same bank 32. Upon receipt of string 21, interleaver 14 performs the requested actions.

High level commands 22 are READ 22-1, WRITE 22-2, EXTEND 22-3, INTERRUPT 22-4 and REFRESH 22-5. (Commands 22 are printed in all capital letters to readily distinguish them from low-level commands 20.) In brief, the operation of READ 22-1, WRITE 22-2 and REFRESH 22-5 commands is essentially the same as their low-level command 20 namesakes. EXTEND 22-3 acts to repeat the actions of the previous WRITE 22-2 or READ 22-1 command, INTERRUPT 22-4 is needed as a result of the burst length being fixed at four words 24, as discussed further below. Taken together, commands 22 provide a powerful programming tool.

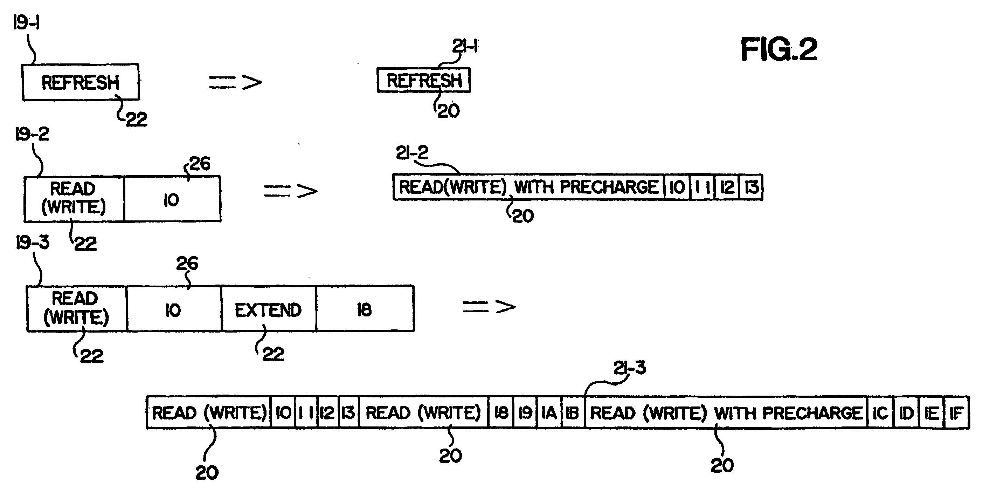

Before studying examples of how commands 22 simplify the task of accessing DRAM 16, commands 22 themselves should be examined in more detail. The first high-level command 22 of high-level command string 19 is either READ 22-1 or WRITE 22-2. The first low-level command 20 of the corresponding low-level command string 21 is always active command 20. Each READ or WRITE command 22 orders four sequential words 24 to be read or written, respectively. As shown in figure 2, each READ or WRITE command 22 is accompanied by the address 26 (in the particular bank 32 being accessed) of the first word 24 of the four sequential words 24. (Note that under the JEDEC standard, this first word 24 must be an even count.)

When DRAM 16 is in "automatic precharge mode," if the READ or WRITE command 22 is the last command 22 in string 19 (i.e., if the next command to state machine 12 is addressed to the other bank 32 of DRAM 16), then state machine 12 will issue a read or write with precharge command 20, followed by the requisite addresses 26 of the appropriate four sequential words 24. Otherwise, state machine 12 will generate a read or write command 20, followed by the requisite addresses 26. For example, if in automatic precharge mode the last command 22 in string 19-2 is READ 22-1 with address 26 of 10, the corresponding string 21-2 will be read with precharge command 20, followed by addresses 26 of 10, 11, 12 and 13.

In figure 2, EXTEND 22-3 is shown at the end of string 19-3, following READ (WRITE) command 22. Like READ and WRITE commands 22, the format of EXTEND 22-3 includes the address 26 of the first word 24 in a sequence of four words 24. In the automatic precharge mode, when EXTEND 22-3 occurs at the end of a string 19, as in string 19-3, an additional read (write) with precharge is added to string 21.

Another aspect of the invention fixes the burst length at four words 24, saving the complexity needed to support a dynamically varying burst length. To handle the two word transfers required by the JEDEC standard, INTERRUPT 22-4 is provided. Referring now to figure 1, 2 and 3, INTERRUPT 22-4 causes state machine 12 to begin a four word 24 long low-level command 20 read (or write). However, after two words 24 have been read (or written), state machine 12 causes enable line 30 to banks 32 to go low, disabling banks 32. In this manner, although state machine 12 issues low level command 20 for a four word 24 read (or write), only two words 24 are actually read from (or written to) banks 32.

Of course, after enable line 30 is dropped low, another two clock cycles are required to complete the now ineffective read (or write) command 20. But this approach saves having to deal with two words 24 of unwanted data, while allowing the burst length to be fixed at four words 24.

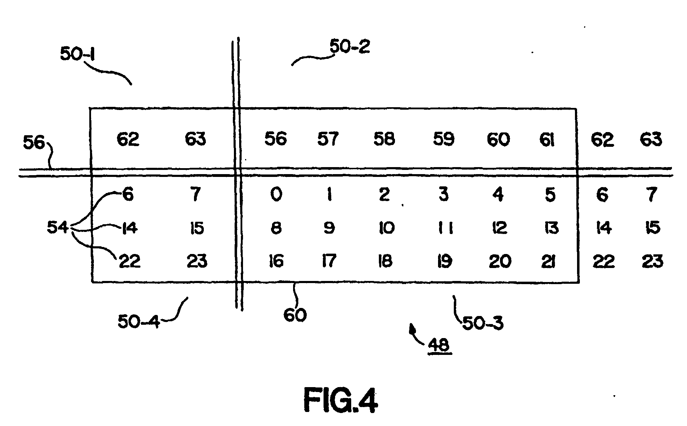

Referring now to figures 1, 2, 3 and 4, in figure 4 there is a diagram portraying how words 24 are stored within banks 32. Figure 4 shows a portion 48 of a two dimensional array of cells 50, each cell 50 including an M by N matrix of words 24, each word being represented by a number 54 that serves as the address of the word 24 within the cell 50. In particular, each cell 50 is shown as being eight rows by eight columns of words 24. Cells 50 are aligned according to grid pattern 56.

Superimposed on cells 50 is a cell 60 that represents a desired new cell to be created by reading words 24 from the underlying cells 50 (for storage in another portion of DRAM 16). Cell 60 is aligned with words 24, but that is not aligned with grid pattern 56. Cell 60 overlies cells 50-1, 50-2, 50-3 and 50-4. Cells 50-1 and 50-3 contain words 24 stored in the same bank 32 (e.g., bank0), but possibly on different pages. Similarly, cells 50-2 and 50-4 contain words 24 stored in the other bank 32 (e.g., bank1), but possibly on different pages.

To read the appropriate words 24 from cell 50-1, one could use the following string 19 of high-level commands 22:
READ(62,x), INTERRUPT(62,62).
The corresponding string 21 of low-level commands 20 would be:
active(bank0), read(62,63), read(62,63), read and precharge(62,63).

To read the appropriate words 24 from cell 50-4, one could use the following high-level commands 22:
READ(6,x), INTERRUPT(14,22).
The corresponding string 21 of low-level commands 20 would be:
active(bank1), read(6,7), read(14,15,don't care,don't care) read and precharge(22,23,don't care,don't care).

To read the appropriate words 24 from cell 50-3, one could use the following high-level commands 22:
READ(0,x), EXTEND(8,x), EXTEND(16,x), EXTEND(4,x), INTERRUPT(12,20).
The corresponding string 21 of low-level commands 20 would be:
active(banko), read(0,1,2,3), read(8,9,10,11), read(16,17,18,19), read(4,5), read(12,13), read and precharge(20,21,don't care, don't care).

While the invention has been described with reference to the structures and methods disclosed, it is not confined to the specific details set forth, but is intended to cover such modifications or changes as may come within the scope of the following claims.

It will be appreciated that certain structural veriations may suggest themselves to those skilled in the art. The foregoing detailed description is to be clearly understood as given by way of illustration, the spirit and scope of this invention to be limited solely by the appended claims.

## Claims

1. A method of accessing from RAM a number M of words that is less than the predetermined fixed burst length N of the RAM, the RAM including an enable line that selectably enables and disables reading from and writing to the RAM, the method consisting in :
• ordering N words to be read from or written to the RAM ;
• determining when M words have been read from or written to the RAM, M being less than N; and
• disabling the RAM upon determining M words had been read from or written to the RAM.

2. A method of reading from RAM a number M of words that is less than the predetermined fixed burst length N of the RAM, the RAM including an enable line that selectably enables and disables reading from the RAM, the method **characterized by** :
• ordering N words to be read from the RAM ;
• determining when M words have been read from the RAM, M being less than N ; and
• disabling the RAM upon determining M words had been read from the RAM.

3. A method of writing to RAM a number M of words that is less than the predetermined fixed burst length N of the RAM, the RAM including an enable line that selectably enables and disables writing to the RAM, the method **characterized by** :
• ordering N words to be written to the RAM ;
• determining when M words have been written to the RAM, M being less than N ; and
• disabling the RAM upon determining M words had been written to the RAM.

4. The method of claim 1, wherein N = 4 and M = 2 and wherein in the disabling step the RAM is disabled so that only two words of the four words is transferred.

5. The method of claim 4, wherein the RAM comprises DRAM compliant with the JEDEC standard.

6. The method of claim 1, wherein the RAM comprises DRAM.

7. The method of claim 1, wherein the RAM comprises synchronous DRAM.

8. An apparatus for accessing from RAM a number M of words, comprising:
• a RAM memory having a fixed burst length ofN words, and configured to operate so that N words are read from or written to the RAM memory in a single burst ; and,
• an enable line configured to selectably enable or disable reading from or writing to the RAM, said enable line being adapted to :
◆ ordering N words to be read from or written to the RAM ;
◆ determining when M words have been read from or written to the RAM, M being less than N ; and
◆ disabling the RAM upon determining M words had been read from or written to the RAM.

9. The apparatus of claim 8, further comprising a state machine controlling the enable line, wherein the state machine initiates the burst causing transfer of the N words and then causes the enable line to go low so that only M of the N words are read from or written to the memory.

10. The apparatus of claim 8, wherein the memory comprises one or more banks of RAM.

11. The apparatus of claim 8, wherein the memory comprises one or more banks of DRAM.

12. The apparatus of claim 8, wherein the RAM comprises DRAM compliant with the JEDEC standard.

13. The apparatus of claim 8, wherein the RAM comprises DRAM.

14. The apparatus of claim 8, wherein the RAM comprises synchronous DRAM.

## Patentansprüche

1. Verfahren zum Zugreifen aus dem RAM-Speicher auf eine Anzahl M von Wörtern, die geringer ist als die vorbestimmte feste Burstlänge N des RAM-Speichers, wobei der RAM-Speicher eine Freigabeleitung umfasst, die selektiv den RAM-Speicher für das Auslesen daraus und das Schreiben darin freigibt und sperrt, wobei das Verfahren besteht in:
- Anweisen, dass N Wörter aus dem RAM-Speicher ausgelesen oder in den RAM-Speicher geschrieben werden;
- Feststellen, wann M Wörter aus dem RAM-Speicher ausgelesen oder in den RAM-Speicher geschrieben wurden, wobei M kleiner N ist; und
- Sperren des RAM-Speichers, wenn festgestellt wird, dass M Wörter aus dem RAM-Speicher ausgelesen oder in den RAM-Speicher geschrieben wurden.

2. Verfahren zum Auslesen aus dem RAM-Speicher einer Anzahl M von Wörtern, die geringer ist als die vorbestimmte feste Burstlänge N des RAM-Speichers, wobei der RAM-Speicher eine Freigabeleitung umfasst, die selektiv den RAM-Speicher für das Auslesen daraus freigibt und sperrt, wobei das Verfahren **gekennzeichnet ist durch**:
- Anweisen, dass N Wörter aus dem RAM-Speicher ausgelesen werden;
- Feststellen, wann M Wörter aus dem RAM-Speicher ausgelesen wurden, wobei M kleiner N ist; und
- Sperren des RAM-Speichers, wenn festgestellt wird, dass M Wörter aus dem RAM-Speicher ausgelesen wurden.

3. Verfahren zum Schreiben in den RAM-Speicher einer Anzahl M von Wörtern, die geringer ist als die vorbestimmte feste Burstlänge N des RAM-Speichers, wobei der RAM-Speicher eine Freigabeleitung umfasst, die selektiv den RAM-Speicher für das Schreiben darin freigibt und sperrt, wobei das Verfahren **gekennzeichnet ist durch**:
- Anweisen, dass N Wörter in den RAM-Speicher geschrieben werden;
- Feststellen, wann M Wörter in den RAM-Speicher geschrieben wurden, wobei M kleiner N ist; und
- Sperren des RAM-Speichers, wenn festgestellt wird, dass M Wörter in den RAM-Speicher geschrieben wurden.

4. Verfahren nach Anspruch 1, bei dem N = 4 und M = 2 ist und bei dem der RAM-Speicher beim Schritt des Sperrens gesperrt wird, so dass nur zwei der vier Wörter transferiert werden.

5. Verfahren nach Anspruch 4, bei dem der RAM-Speicher einen DRAM-Speicher umfasst, der dem JEDEC-Standard entspricht.

6. Verfahren nach Anspruch 1, bei dem der RAM-Speicher einen DRAM-Speicher umfasst.

7. Verfahren nach Anspruch 1, bei dem der RAM-Speicher einen synchronen DRAM-Speicher umfasst.

8. Eine Vorrichtung zum Zugreifen aus dem RAM-Speicher auf eine Anzahl M von Wörtern, umfassend:
- einen RAM-Speicher mit einer festen Burstlänge von N Wörtern, dessen Funktionsweise so konfiguriert ist, dass N Wörter in einem einzigen Burst aus dem RAM-Speicher ausgelesen oder in den RAM-Speicher geschrieben werden; und
- eine Freigabeleitung, die so konfiguriert ist, dass sie den RAM-Speicher selektiv für das Auslesen daraus und das Schreiben darin freigibt oder sperrt, wobei die Freigabeleitung angepasst ist zum:
- Anweisen, dass N Wörter aus dem RAM-Speicher ausgelesen oder in den RAM-Speicher geschrieben werden;
- Feststellen, wann M Wörter aus dem RAM-Speicher ausgelesen oder in den RAM-Speicher geschrieben wurden, wobei M kleiner N ist; und
- Sperren des RAM-Speichers, wenn festgestellt wird, dass M Wörter aus dem RAM-Speicher ausgelesen oder in den RAM-Speicher geschrieben wurden.

9. Vorrichtung nach Anspruch 8, die außerdem eine Zustandsmaschine umfasst, die die Freigabeleitung steuert, wobei die Zustandsmaschine den Burst initiiert, woraufhin die N Wörter transferiert werden, und anschließend dazu führt, dass die Freigabeleitung auf Low geht, so dass nur M der N Wörter aus dem Speicher ausgelesen oder in den Speicher geschrieben werden.

10. Vorrichtung nach Anspruch 8, bei der der Speicher eine oder mehrere Banks des RAM-Speichers umfasst.

11. Vorrichtung nach Anspruch 8, bei der der Speicher eine oder mehrere Banks des DRAM-Speichers umfasst.

12. Vorrichtung nach Anspruch 8, bei der der RAM-Speicher einen DRAM-Speicher umfasst, der dem JEDEC-Standard entspricht.

13. Vorrichtung nach Anspruch 8, bei der der RAM-Speicher einen DRAM-Speicher umfasst.

14. Vorrichtung nach Anspruch 8, bei der der RAM-Speicher einen synchronen DRAM-Speicher umfasst.

## Revendications

1. Un procédé pour accéder, dans une mémoire vive (RAM) à un nombre M de mots, inférieur à la longueur N de rafale fixe prédéterminé, de la mémoire vive, la mémoire vive comprenant une ligne de validation permettant de valider et d'inhiber sélectivement la lecture de la mémoire vive et l'écriture vers celle-ci, le procédé comprenant les étapes consistant :
- à commander la lecture ou l'écriture de N mots à partir de la mémoire vive ou dans celle-ci ;
- à déterminer le moment où les M mots ont été lus ou écrits dans la mémoire vive, M étant inférieur à N ; et
- à inhiber la mémoire vive suite à la détermination de la lecture ou de l'écriture des M mots dans la mémoire vive.

2. Un procédé de lecture, dans une mémoire vive, d'un nombre M de mots qui est inférieur à la longueur N de rafale fixe prédéterminée de la mémoire vive, la mémoire vive comprenant une ligne de validation permettant de valider et d'inhiber sélectivement la lecture dans la mémoire vive, le procédé étant **caractérisé par** :
- la commande de la lecture de N mots dans la mémoire vive ;
- la détermination du moment où M mots ont été lus dans la mémoire vive, M étant inférieur à N ; et
- l'inhibition de la mémoire vive suite à la détermination de la lecture de M mots dans la mémoire vive.

3. Un procédé d'écriture, dans une mémoire vive, d'un nombre M de mots qui est inférieur à la longueur N de rafale fixe prédéterminée de la mémoire vive, la mémoire vive comprenant une ligne de validation permettant de valider et d'inhiber sélectivement l'écriture dans la mémoire vive, le procédé étant **caractérisé par** :
- la commande de l'écriture de N mots dans la mémoire vive ;
- la détermination du moment où M mots ont été écris dans la mémoire vive, M étant inférieur à N ; et
- l'inhibition de la mémoire vive suite à la détermination de l'écriture de M mots dans la mémoire vive.

4. Le procédé selon la revendication 1, dans lequel N = 4 et M = 2, et dans lequel, dans l'étape d'inhibition, la mémoire vive est inhibée de sorte à ne transférer que deux mots parmi les quatre mots.

5. Le procédé selon la revendication 4, dans lequel la mémoire vive comprend une mémoire vive dynamique (DRAM) conforme à la norme JEDEC

6. Le procédé selon la revendication 1, dans lequel la mémoire vive comprend une mémoire vive dynamique (DRAM).

7. Le procédé selon la revendication 1, dans lequel la mémoire vive comprend une mémoire DRAM synchrone.

8. Un appareil pour accéder, dans une mémoire vive (RAM), à un nombre M de mots, comprenant :
- une mémoire vive (RAM) présentant une longueur de rafale fixe égale à N mots, et configurée pour fonctionner de sorte que les N mots soient lus ou écris dans la mémoire vive en une seule rafale ; et
- une ligne de validation configurée pour valider ou inhiber sélectivement la lecture ou l'écriture de la mémoire vive, ladite ligne de validation étant adaptée :
- à commander la lecture ou l'écriture de N mots à partir de la mémoire vive ou dans celle-ci ;
- à déterminer le moment où les M mots ont été lus ou écrits dans la mémoire vive, M étant inférieur à N ; et
- à inhiber la mémoire vive suite à la détermination de la lecture ou de l'écriture des M mots dans la mémoire vive.

9. L'appareil selon la revendication 8, comprenant en outre une machine à états gérant la ligne de validation, dans lequel la machine à états lance la rafale en provoquant le transfert de N mots et fait ensuite passer au niveau logique bas la ligne de validation de sorte qu'uniquement M parmi les N mots soit lu ou écris dans la mémoire.

10. L'appareil selon la revendication 8, dans lequel la mémoire comprend un ou plusieurs bancs de mémoire vive.

11. L'appareil selon la revendication 8, dans lequel la mémoire comprend un ou plusieurs bancs de mémoire vive dynamique (DRAM).

12. L'appareil selon la revendication 8, dans lequel la mémoire vive comprend une mémoire (DRAM) conforme à la norme JDEC.

13. L'appareil selon la revendication 8, dans lequel la mémoire vive comprend de la mémoire DRAM.

14. L'appareil selon la revendication 8, dans lequel la mémoire vive comprend de la mémoire DRAM synchrone.
